# EUROPÄISCHE PATENTANMELDUNG

(11) **EP 4 450 937 A1**
(43) Veröffentlichungstag der Anmeldung: **23.10.2024**
(21) Anmeldenummer: 24170393.3
(22) Anmeldetag: 16.04.2024
(51) Int. Cl.: G01K 13/00

(54) **SPEISENTHERMOMETER, SYSTEM UND VERFAHREN**

(30) Priorität: 19.04.2023 DE 102023203598
(71) Anmelder: Vorwerk & Co. Interholding GmbH, 42270 Wuppertal (DE)
(72) Erfinder: LANGENBERG, Stephan, 52441 Linnich (DE); STEIN, Matthias, 45472 Mühlheim (DE)
(74) Vertreter: Gille Hrabal Partnerschaftsgesellschaft mbB Patentanwälte

(57) **Zusammenfassung**

Die Erfindung betrifft ein Speisenthermometer, ein System mit einem Speisenthermometer und einem Werkzeug sowie ein Verfahren zum Einsetzen einer Batterie in ein Speisenthermometer. Ein Speisenthermometer (1) umfasst eine Temperaturmesseinheit (5) und eine Batterieaufnahme (6) zum Aufnehmen einer Batterie (7) zum Betreiben der Temperaturmesseinheit (5). Die Temperaturmesseinheit (5) und die Batterieaufnahme (6) sind in einem Gehäuse (10) untergebracht. Das Gehäuse (10) weist eine verschließbare Öffnung (13) auf, um die Batterieaufnahme (6) für ein Wechseln der Batterie (7) freizugeben. Auf diese Weise kann die Batterie gewechselt werden und die Lebensdauer des Thermometers kann signifikant verlängert werden.

## Beschreibung

Die Erfindung betrifft ein Speisenthermometer, ein System mit einem Speisenthermometer und einem Werkzeug sowie ein Verfahren zum Einsetzen einer Batterie in ein Speisenthermometer

Ein Speisenthermometer (in diesem Dokument auch kurz als "Thermometer" bezeichnet) ist ein Thermometer, mit dem die Temperatur einer Speise insbesondere während der Zubereitung der Speise gemessen werden soll. Das Thermometer kann dafür bestimmt und geeignet sein, in eine Speise hineingestochen zu werden, um die Temperatur im Inneren der Speise zu messen. Ein solches Thermometer weist dann typischerweise eine Spitze auf, um beispielsweise in Fleisch hineingestochen werden zu können. Ein temperaturempfindlicher Sensor des Thermometers kann sich dann in oder bei der Spitze befinden, um die Innentemperatur des Fleischs messen zu können. Beispiele von solchen Thermometern sind aus den Druckschriften EP 0687866A1, US 6,568,848 B1 und US 7,075,442 B2 bekannt.

Ein Speisenthermometer kann Temperaturen messen, die bei der Zubereitung einer Speise auftreten können. Deutlich davon abweichende Temperaturen können nicht gemessen werden. Außerdem ist ein Thermometer den Umgebungsbedingungen gewachsen, die während einer Zubereitung einer Speise auftreten können. Grundsätzlich ist das Thermometer so eingerichtet, dass dieses in einem herkömmlichen Backofen eingesetzt werden kann, also bei Temperaturen von bis zu 250°C, bis zu 300°C oder bis zu 350°C. Höhere Temperaturen können nicht gemessen werden. Ein Speisenthermometer im Sinne der vorliegenden Erfindung kann zudem einer Dampfatmosphäre widerstehen. Ein Speisenthermometer ist daher grundsätzlich wasserdicht gekapselt. Ein Speisenthermometer im Sinne der vorliegenden Erfindung ist resistent gegenüber üblichen Zutaten einer Speise wie zum Beispiel Säure von Zitronen oder Essig.

Ein Speisenthermometer weist typischerweise eine elektrisch und/oder elektronisch betriebene Temperaturmesseinheit zum Messen der Temperatur sowie eine Batterie zum Betreiben der Temperaturmesseinheit auf. Die Batterie ist in der Regel wiederaufladbar, sodass eine gewisse Lebensdauer des Thermometers gewährleistet werden kann. Dennoch ist die Lebensdauer begrenzt, da die wiederaufladbar Batterie einer Alterung unterworfen ist, sodass ihre Kapazität mit fortschreitendem Alter kontinuierlich abnimmt. Reicht die Kapazität für bestimmte Speisenzubereitungsprozesse nicht mehr aus, muss das Thermometer ersetzt werden.

Es ist die Aufgabe der Erfindung, ein weiterentwickeltes Speisenthermometer, ein System sowie ein Verfahren zur Verfügung zu stellen, insbesondere vor dem oben genannten Hintergrund.

Zur Lösung der Aufgabe dient ein Speisenthermometer gemäß Anspruch 1 und ein System sowie ein Verfahren gemäß den nebengeordneten Ansprüchen. Vorteilhafte Ausgestaltungen sind in den Unteransprüchen angegeben.

Zur Lösung der Aufgabe dient ein Speisenthermometer. Das Speisenthermometer umfasst eine Temperaturmesseinheit und eine Batterieaufnahme zum Aufnehmen einer Batterie zum Betreiben der Temperaturmesseinheit. Die Temperaturmesseinheit und die Batterieaufnahme sind in einem Gehäuse untergebracht. Das Gehäuse weist eine verschließbare Öffnung auf, um die Batterieaufnahme für ein Wechseln der Batterie freizugeben.

Die Öffnung erlaubt es, die Batterie zu wechseln. Es kann eine Batterie aus der Batterieaufnahme entfernt werden und es kann eine neue Batterie in die Batterieaufnahme eingesetzt werden. Anders als im Stand der Technik, bei dem die Batterie eines Speisenthermometers grundsätzlich fest verbaut ist, kann beim erfindungsgemäßen Thermometer durch die Möglichkeit zum Batteriewechsel die Lebensdauer des Thermometers deutlich verlängert werden. Die Reparatur wird erleichtert. Auf diese Weise können Ressourcen gespart, Emissionen vermieden und die Nachhaltigkeit verbessert werden.

Das Thermometer kann die Batterie umfassen. Die Batterie ist zum Betreiben der Temperaturmesseinheit geeignet. Typischerweise ist die Batterie eine wiederaufladbare Batterie (Akku). Auch in diesem Fall ist es jedoch wünschenswert, die Batterie austauschbar zu gestalten. Auf diese Weise kann bei verringerter Speicherkapazität oder bei Defekt der Batterie die Funktion des Thermometers vollständig wiederhergestellt werden.

Die Öffnung dient dazu, die Batterieaufnahme freizugeben. Zu diesem Zweck kann die Öffnung geöffnet werden. Die Öffnung dient dazu, das Gehäuse zu öffnen. Die Öffnung stellt einen Zugang durch das Gehäuse ins Innere des Thermometers und zur Batterieaufnahme bereit. Freigeben der Batterieaufnahme bedeutet Öffnen derart, dass eine Batterie aus der Batterieaufnahme entfernt werden und/oder in die Batterieaufnahme eingesetzt werden kann. Die verschließbare Öffnung kann auch als Schnittstelle oder Montageschnittstelle bezeichnet werden. Die Öffnung kann grundsätzlich an jeder Stelle des Thermometers angeordnet sein, welcher ein Wechseln der Batterie ermöglicht.

Die Öffnung ist verschließbar. Das Verschließen kann z. B. mit einem oder mehreren Verschlusselementen erfolgen. Ein Verschlusselement kann ein Teil des Gehäuses oder ein zusätzliches Verschlusselement wie beispielsweise eine Abdeckung, eine Klappe oder eine flexible Lasche sein. Ein solches Verschlusselement kann am Gehäuse befestigt sein, beispielsweise beweglich wie z. B. schwenkbar, oder separat vom Gehäuse vorliegen.

Insbesondere umfasst das Thermometer das Gehäuse. Im verschlossenen Zustand ist das Gehäuse bevorzugt so verschlossen, dass ein Eindringen von Flüssigkeit und/oder Dampf verhindert wird, sodass das Thermometer auch in einer heißen Atmosphäre, z. B. in einem Backofen, betrieben werden kann und das Innere des Thermometers entsprechend geschützt ist. Die Öffnung kann also typischerweise so verschlossen werden, dass die Funktionsfähigkeit des Thermometers vollständig und dauerhaft erhalten bleibt. Dementsprechend bleiben die Dichtigkeit, insbesondere gegenüber Flüssigkeit und Dampf, sowie die Hochtemperaturbeständigkeit erhalten.

Das Öffnen und Schließen des Gehäuses mittels der verschließbaren Öffnung erfolgt zerstörungsfrei und reversibel. So kann nach dem Schließen typischerweise der Zustand vor dem Öffnen wiederhergestellt werden. Dies kann, von normalem Verschleiß abgesehen, beliebig oft wiederholt werden.

Eine Batterieaufnahme ist ein Hohlraum, der geeignet ist, eine Batterie aufzunehmen. Insbesondere hält die Batterieaufnahme die Batterie zudem an Ort und Stelle. Die Batterie kann im Hohlraum angeordnet werden und in dieser Position für das Betreiben der Temperaturmesseinheit verwendet werden. Das Speisenthermometer verfügt typischerweise über zwei elektrische Kontakte für die Batterie. Diese können so angeordnet sein, dass eine elektrische Kontaktierung der beiden Pole der Batterie erfolgen kann, wenn die Batterie sich in der Batterieaufnahme befindet.

Die Temperaturmesseinheit ist eine elektrisch und/oder elektronisch betriebene Einheit zum Messen einer Temperatur. In einer Ausführungsform umfasst die Temperaturmesseinheit einen Temperatursensor zum Messen einer Temperatur. Ein Temperatursensor ist ein elektrisches oder elektronisches Bauelement, das ein elektrisches Signal als Maß für die Temperatur liefert. Der Temperatursensor kann beispielsweise einen elektrischen Leiter umfassen, dessen von der Temperatur abhängiger elektrischer Widerstand gemessen wird. Der gemessene elektrische Widerstand ist dann das Maß für die Temperatur. In einer Ausführungsform umfasst die Temperaturmesseinheit eine Auswertelektronik. Die Auswertelektronik kann aus elektrischen Signalen eines Temperatursensors Temperaturwerte ermitteln. Die Auswertelektronik kann an die Batterieaufnahme angrenzen. Diese Anordnung erlaubt eine besonders bauraumsparende Bauweise. Die Auswerteelektronik kann einen integrierten Schaltkreis umfassen oder durch einen solchen gebildet sein.

In einer Ausführungsform umfasst das Speisenthermometer eine Funkeinheit zum drahtlosen Senden und/oder Empfangen von Signalen, insbesondere Daten und/oder Befehlen. Die Funkeinheit kann mittels der Batterie betrieben werden und/oder Teil der Temperaturmesseinheit sein. In einer Ausführungsform umfasst das Thermometer bevorzugt in dem der Spitze gegenüberliegenden, rückwärtigen Teil eine Antenne zum drahtlosen Senden und/oder Empfangen von Informationen. Die Antenne kann Teil der Funkeinheit sein. Beispielsweise können so gemessene Temperaturen an ein externes Gerät wie ein Smartphone oder eine Küchenmaschine gesendet werden. Beispielsweise können Befehle wie z. B. ein Befehl zur Durchführung einer Messung mit einem externen Gerät an das Thermometer gesendet und von dem Thermometer empfangen werden.

In einer Ausführungsform umfasst das Thermometer eine Spitze zum Einstechen in ein Nahrungsmittel bzw. in eine Speise. In einer Ausführungsform umfasst das Thermometer ein Griffteil. Ein Griffteil ist dazu bestimmt und geeignet, ergriffen zu werden, um die Spitze in ein Nahrungsmittel hineinzustechen und aus dem Nahrungsmittel bzw. der daraus hergestellten Speise wieder herauszuziehen. Ein Griffteil kann daher eine Hülle oder Ummantelung aus einem thermisch isolierenden Material wie Kunststoff umfassen. Im Griffteil kann die Antenne angeordnet sein.

In einer Ausführungsform ist das Speisenthermometer nicht länger als 30 cm, vorzugsweise nicht länger als 20 cm. In einer Ausführungsform ist das Speisenthermometer länger als 10 cm, vorzugsweise länger als 12 cm.

In einer Ausgestaltung weist das Gehäuse ein erstes Gehäuseteil und ein zweites Gehäuseteil auf. Das zweite Gehäuseteil kann vom ersten Gehäuseteil getrennt werden. Auf diese Weise kann die Öffnung geöffnet werden. Das zweite Gehäuseteil kann insbesondere mit dem ersten Gehäuseteil wieder verbunden werden. In dieser Ausgestaltung sind zwei Öffnungen vorhanden. Jede der Öffnungen wird durch das Trennen der beiden Gehäuseteile geöffnet und/oder durch Verbinden der beiden Gehäuseteile verschlossen. Mit anderen Worten dient ein jeweiliges Gehäuseteil dem Verschließen des jeweils anderen Gehäuseteils. In dieser Ausgestaltung ist kein separates Verschlusselement zum Schließen der Öffnung vorhanden. Auf diese Weise kann technisch besonders einfach eine dichte Öffnung bereitgestellt werden. Es wird zudem ein Verlieren eines separaten Verschlusselements verhindert. Das Trennen und anschließende Verbinden der beiden Gehäuseteile ist vergleichsweise einfach durchzuführen, sodass der Wechsel der Batterie durch einen Benutzer des Thermometers erfolgen kann.

Insbesondere ist die Batterieaufnahme zumindest vorwiegend und in einer Ausführungsform vollständig in einem der beiden Gehäuseteile angeordnet. Die Öffnung im Sinne des Anspruchs 1 ist hierbei die Öffnung dieses Gehäuseteils mit der Batterieaufnahme.

In einer Ausgestaltung befinden sich das erste Gehäuseteil und das zweite Gehäuseteil an unterschiedlichen Positionen entlang der Längsrichtung des Speisenthermometers. Beispielsweise ist das erste Gehäuseteil der Spitze des Thermometers zugewandt und das zweite Gehäuseteil entspricht einem hinteren Teil des Thermometers. Mit anderen Worten ist das Gehäuse entlang seiner Längserstreckungsrichtung in zwei Teile getrennt. Eine Trennlinie oder Trennebene zwischen den Gehäuseteilen kann dabei im Wesentlichen senkrecht zu der Längserstreckungsrichtung verlaufen. So kann mit besonders geringem technischem Aufwand eine verschließbare Öffnung bereitgestellt werden.

In einer Ausgestaltung weist das Speisenthermometer eine Spitze zum Einstechen in eine Speise auf. In einer Ausgestaltung umfasst das zweite Gehäuseteil die Spitze und/oder weist eine Länge von höchstens 6 cm, insbesondere von höchstens 4 cm auf. Die Länge beträgt insbesondere mindestens 1 cm. Die Länge wird entlang der Längserstreckung des Speisenthermometers gemessen.

Bevorzugt ist die Batterie im Bereich der Spitze angeordnet. Dies ist besonders vorteilhaft, da die Spitze bei Verwendung in einer heißen Atmosphäre, beispielsweise in einem Backofen, in die zuzubereitende Speise eingesteckt ist. Da das Innere der Speise sich zuletzt erwärmt, ist dies typischerweise die kühlste Stelle. Somit wird die Batterie vor übermäßiger Hitze geschützt, was ihre Lebensdauer deutlich erhöht. Insbesondere ist der am weitesten von der Spitze entfernte Teil der Batterie, entlang der Längsrichtung des Thermometers gemessen, nicht weiter als 8 cm, bevorzugt nicht weiter als 6 cm und besonders bevorzugt nicht weiter als 5 cm von der Spitze entfernt.

Die geringe Länge des zweiten Gehäuseteils hat den Effekt, dass das Gehäuse im Bereich der Spitze geöffnet werden kann und muss. Dies bewirkt, dass ein Zugang zu der Position der Batterie in der Spitze möglich ist, ohne dass die Batterie zum Wechseln über eine große Strecke im Inneren des Thermometers bewegt werden muss. So kann die Batterie besonders einfach gewechselt werden. Ein Herausziehen eines Innenteils des Thermometers wie etwa einer Platine oder dergleichen ist nicht notwendig. So wird eine Beschädigung dieses Innenteils verhindert. Zudem wird ein Verkanten des Innenteils und/oder der Batterie beim Bewegen durch das Gehäuse verhindert.

Da die Spitze des Thermometers zum Einstechen in ein Lebensmittel dient, muss hierbei eine besonders dichte Abdichtung erfolgen. Insbesondere ist das Thermometer so ausgestaltet, dass im verschlossenen Zustand der Öffnung eine Außenkontur des Gehäuses zumindest im Bereich der Öffnung im Wesentlichen glatt ist. Auf diese Weise wird verhindert, dass sich Speisenreste oder andere Verschmutzungen ansammeln. Zudem wird ein leichtes Einstechen in eine Speise und Herausziehen aus einer Speise gewährleistet.

In einer Ausgestaltung weist das Speisenthermometer ein Verbindungsmittel auf, um das erste Gehäuseteil und das zweite Gehäuseteil im verbundenen Zustand formschlüssig miteinander zu verbinden.

Das Verbindungsmittel kann als Verschluss zum Verschließen der Öffnung dienen. Das Verbindungsmittel kann einteilig oder mehrteilig sein. Das Verbindungsmittel kann z. B. ein erstes Gewinde im ersten Gehäuseteil und ein korrespondierendes zweites Gewinde im zweiten Gehäuseteil umfassen. So können die beiden Gehäuseteile durch Schrauben miteinander formschlüssig verbunden werden. Zumindest in der axialen sowie in der radialen Richtung, bezogen auf die Mittellängsachse des Thermometers, ist dann ein Formschluss vorhanden. Auf diese Weise kann besonders einfach ein dauerhaftes und reversibles Öffnen und Schließen der Öffnung gewährleistet werden. Das Gewinde ist bevorzugt ein Feingewinde, hat also ein engeres Gewindeprofil und eine geringere Steigung. Dies ermöglicht eine höhere Festigkeit durch eine größere Selbsthemmung.

Alternativ oder ergänzend kann das Verbindungsmittel eine Schraube, beispielsweise eine Madenschraube, und ein oder zwei Löcher umfassen. Die Schraube kann durch ein Durchgangsloch in einem der beiden Gehäuseteile hindurch das andere der beiden Gehäuseteile kontaktieren oder in ein Loch, beispielsweise ein Gewindeloch, im anderen Gehäuseteil hineingeschraubt werden und so eine formschlüssige Verbindung ermöglichen. Die Schraube kann als Einzelteil vorliegen oder in einem der Gehäuseteile verliersicher gehalten sein.

Alternativ zu dieser Ausgestaltung ist es grundsätzlich auch möglich, dass das Speisenthermometer ein Verbindungsmittel aufweist, um das erste Gehäuseteil und das zweite Gehäuseteil im verbundenen Zustand kraftschlüssig miteinander zu verbinden. Hierbei kann die Verbindung beispielsweise mit einer Presspassung oder einem Einklemmen erreicht werden. Eine formschlüssige Verbindung erlaubt allerdings eine höhere Festigkeit und Dichtigkeit und ist daher zu bevorzugen.

In einer Ausgestaltung ist das Speisenthermometer so ausgestaltet, dass nach einem Öffnen des Gehäuses ein unmittelbarer Zugriff auf die Batterieaufnahme möglich ist. Der Hohlraum der Batterieaufnahme befindet sich also derart in der Nähe der Öffnung, dass er nach Öffnen des Gehäuses direkt zugänglich ist. So kann die Batterie nach dem Öffnen unmittelbar und damit besonders einfach entfernt oder eingesetzt werden.

Auch hier ist ein Bewegen der Batterie durch das Innere des Gehäuses und die damit verbundenen Nachteile zum Wechseln der Batterie nicht notwendig.

Dem steht nicht entgegen, dass ein Positionierungselement zur Positionierung der Batterie vorhanden sein kann, um die Batterie in die Batterieaufnahme oder aus dieser heraus zu bewegen und/oder die Batterie in der Batterieaufnahme in Position zu halten. Die Batterie kann gemeinsam mit einem solchen Positionierungselement in die Batterieaufnahme eingeführt oder aus dieser herausgenommen werden.

In einer Ausgestaltung umfasst das Speisenthermometer ein Dichtelement, welches das Gehäuse im geschlossenen Zustand, z. B. nach dem Schließen der Öffnung, abdichtet. Das Abdichten meint ein Abdichten gegenüber Wasser, Dampf und/oder anderen Verschmutzungen. Insbesondere wird die Öffnung abgedichtet. Auf diese Weise wird gewährleistet, dass das Innere des Thermometers vor der das Thermometer umgebenden Atmosphäre geschützt ist. Stoffeintrag durch die Öffnung ins Innere des Thermometers wird also unterbunden. Zum Beispiel ist eine spülmaschinenfeste Ausgestaltung des Thermometers möglich.

Insbesondere ist das Dichtelement so angeordnet, dass es sowohl das erste Gehäuseteil oder ein am ersten Gehäuseteil direkt oder indirekt befestigtes Element als auch das zweite Gehäuseteil oder ein am zweiten Gehäuseteil direkt oder indirekt befestigtes Element kontaktiert, um auf diese Weise diese beiden Teile gegeneinander abzudichten. Ein Stoffeintrag

In einer Ausgestaltung ist das Dichtelement so ausgebildet und angeordnet, dass zumindest ein Bereich des Dichtelements im mittels des Verbindungsmittels verbundenen Zustand des ersten Gehäuseteils mit dem zweiten Gehäuseteil in eine dichtende Position gedrückt wird.

Insbesondere bewirkt das Verbindungsmittel, dass das Dichtelement in eine dichtende Position gedrückt wird. Beispielsweise kann ein Verbindungsmittel wie z. B. eine Madenschraube direkt oder indirekt auf das Dichtelement drücken, oder eine Kombination aus korrespondierenden Gewinden in jedem der Gehäuseteile kann so angeordnet sein, dass im zusammengeschraubten Zustand eine Dichtung komprimiert wird, geschwenkt wird und/oder ausgelenkt wird.

Drücken in eine dichtende Position meint, dass zumindest ein Teil des Dichtelements durch ein Gegenstück, gegen das abgedichtet werde soll, bewegt wird. Auf diese Weise wird eine besonders dichte Abdichtung realisiert. Beispielsweise wird ein Teil des Dichtelements gedreht, geklappt oder anderweitig verformt, um flächig oder linienförmig an dem Gegenstück anzuliegen. Alternativ wird das Dichtelement durch den Druck des Gegenstücks komprimiert, wodurch zumindest eine Seite des Dichtelements verformt wird. Auf diese Weise kann ein besonders sicheres Abdichten erzielt werden. Diese Ausgestaltung des Dichtelements wird auch als selbstverstärkende Dichtung bezeichnet.

In einer Ausführungsform sind ein oder mehrere Vorspannelemente vorgesehen, die beim Zusammendrücken der beiden Gehäuseteile vorgespannt werden. Es muss also beim Zusammendrücken eine Kraft aufgebracht werden, die größer ist als die Vorspannkraft des einen oder der mehreren Vorspannelemente. Als Vorspannelemente können beispielsweise Federn, Gummielemente wie z. B. Gummihülsen, und/oder Membranelemente verwendet werden. Auf diese Weise wird eine besonders hohe Dichtigkeit erreicht. Zudem erhält der Benutzer beim Zusammenbau durch die Vorspannkraft ein Feedback über die vorhandene Dichtwirkung. Das Zusammendrücken kann beispielsweise beim Zusammenschrauben der beiden Gehäuseteile erfolgen.

In einer Ausgestaltung umfasst das Speisenthermometer ein Dichtelement, welches das erste Gehäuseteil oder das zweite Gehäuseteil im geöffneten Zustand des Gehäuses abdichtet. Insbesondere wird das Gehäuseteil abgedichtet, in dem sich nicht die Batterieaufnahme befindet. Dieses kann das Gehäuseteil sein, in dem sich zumindest ein Teil der Temperaturmesseinheit, einer Steuerungseinheit und/oder einer Funkeinheit des Thermometers befindet. Auf diese Weise können diese Teile des Thermometers auch in geöffnetem Zustand des Thermometers vor Verschmutzung geschützt werden.

In einer Ausgestaltung ist ein Dichtelement vorhanden, welches das Gehäuse nach dem Schließen der Öffnung abdichtet und welches das erste Gehäuseteil oder das zweite Gehäuseteil im geöffneten Zustand des Gehäuses abdichtet. Beide Dichtfunktionen werden demnach durch ein einziges Dichtelement erfüllt. Die Dichtfunktionen können durch unterschiedliche Bereiche des Dichtelements realisiert sein. So können beide Dichtfunktionen technisch besonders einfach realisiert sein.

In einer Ausführungsform ist das Thermometer so ausgestaltet, dass das Gehäuse manuell ohne die Notwendigkeit von Werkzeug geöffnet werden kann.

In einer Ausführungsform umfasst das Thermometer zur elektrischen Kontaktierung der Batterie einen Federkontakt. Mit anderen Worten ist zur elektrischen Kontaktierung ein Federelement vorhanden, welches eine Federkraft auf den elektrischen Kontakt der Batterie ausübt. Auf diese Weise kann sichergestellt werden, dass die elektrische Kontaktierung auch bei mehrmaligem Öffnen und Schließen der Öffnung zuverlässig erfolgt.

In einer Ausführungsform ist das Gehäuse elektrisch leitfähig und/oder metallisch. In einer Ausführungsform ist das Thermometer so ausgestaltet, dass das Gehäuse elektrisch mit einem Kontakt der Batterie verbunden oder verbindbar ist. Mit anderen Worten dient das Gehäuse zum Schließen des Stromkreises. Dies ist technisch besonders einfach, da nur ein Kabel im Inneren des Thermometers notwendig ist. Zudem kann das zur Verfügung stehende Innenvolumen des Gehäuses im Bereich der Batterie nur dann vollständig durch die Batterie ausgenutzt werden, wenn keine elektrische Leitung an der Batterie vorbeiführt.

In einer Ausführungsform umfasst das Thermometer ein Positionierungselement zur Positionierung der Batterie, um die Batterie in die Batterieaufnahme oder aus dieser heraus zu bewegen und/oder um die Batterie in der Batterieaufnahme in Position zu halten. Beispielsweise kann Batterieaufnahme in Spitze des Thermometers angeordnet sein. Das Positionierungselement kann eine spitz zulaufende innere Form des Gehäuses an der Spitze mit einer kompakten Form der Batterie in Übereinstimmung bringen.

In einer Ausgestaltung ist das Gehäuse langgestreckt. Das Gehäuse ist langgestreckt, wenn es sehr viel länger als breit und tief ist bzw. der Durchmesser sehr viel kleiner als die Länge des Gehäuses ist. Beispielsweise ist das Gehäuse um einen Faktor von mindestens 5, beispielsweise von mindestens 10, länger als breit und/oder tief. Das Gehäuse kann im Querschnitt beispielsweise kreisrund, oval, quadratisch oder mehreckig sein und/oder eine Abflachung aufweisen. Das Gehäuse verläuft insbesondere linear, um leicht in ein Nahrungsmittel hineingesteckt und leicht wieder herausgezogen werden zu können. Die Längsrichtung des Gehäuses entspricht somit der Längsrichtung des Thermometers. Beispielsweise beträgt eine maximale radiale Erstreckung des Thermometers höchstens 3,5 cm, insbesondere höchstens 2,5 cm und bevorzugt höchstens 2 cm und/oder mindestens 0,5 cm oder 1 cm.

In einer Ausgestaltung ist das Gehäuse zumindest teilweise, insbesondere im Wesentlichen vollständig, aus Metall hergestellt. Da das Gehäuse eine große Oberfläche aufweist und grundsätzlich dünnwandig ist, kann dieses aus einem Metall bestehen, dass nicht in Bezug auf wärmeleitende Eigenschaften optimiert ist. Zumindest im Bereich der Spitze kann das Gehäuse daher teilweise oder vollständig aus Edelstahl bestehen. Es kann aber auch teilweise oder vollständig aus Aluminium bestehen.

Ein weiterer Aspekt der Erfindung ist ein System aus einem Speisenthermometer, insbesondere gemäß der Erfindung, und einem Werkzeug zum Öffnen der Öffnung des Gehäuses. Insbesondere weist das Speisenthermometer zumindest bereichsweise eine nicht kreisförmige Außenkontur auf und das Werkzeug weist eine nicht kreisförmige Innenkontur auf. Das Speisenthermometer mit der Außenkontur kann in das Werkzeug mit der Innenkontur eingeführt und gemeinsam mit diesem gedreht werden. Insbesondere kann die Außenkontur in die Innenkontur eingeführt werden. Auf diese Weise kann, wenn die dem Werkzeug abgewandte Seite des Thermometers festgehalten wird, ohne übermäßige Kraftanstrengung eine relative Drehung der im Werkzeug gehaltenen Seite des Thermometers gegenüber der anderen Seite erfolgen. Alle Merkmale, Vorteile und Ausführungsformen des eingangs erwähnten Speisenthermometers sowie des unten beschriebenen Verfahrens gelten ebenso für das System und umgekehrt.

Um einen besonders festen Verschluss und eine besonders hohe Dichtigkeit zu gewährleisten ist es vorteilhaft, eine feste mechanische Verbindung zwischen den beiden Gehäuseteilen vorzusehen. Da der Durchmesser des Thermometers vergleichsweise klein ist und ggf. das abzunehmende Gehäuseteil auch klein ist, ist zum Öffnen und/oder Schließen eine große Kraft nötig, die ggf. nicht von allen Benutzern sicher per Hand aufgebracht werden kann. Um den Bedienkomfort zu erhöhen, wird daher ein Werkzeug bereitgestellt, mit welchem das kleinere der Gehäuseteile zum Öffnen und/oder Schließen gegriffen werden kann. Es wird also eine drehfeste Verbindung zwischen dem Gehäuseteil und dem Werkzeug ermöglicht. Beispielsweise kann das kleinere Gehäuseteil zu diesem Zweck in das Werkzeug eingeführt werden. Das Werkzeug stellt eine größere Grifffläche und/oder einen größeren Durchmesser zur Verfügung, sodass das Drehen zum Festschrauben oder Abschrauben mit geringerem Kraftaufwand möglich ist. Es kann also das Werkzeug gedreht werden, um das Gehäuse bzw. den entsprechenden Teil des Gehäuses zu drehen.

Es wird davon ausgegangen, dass das andere Gehäuseteil aufgrund der deutlich größeren Länge gut mit der Hand gegriffen werden kann und deshalb die manuelle Kraft für das Schrauben ausreicht, sodass kein zweites Werkzeug für das zweite Gehäuseteil benötigt wird. In einer Ausführungsform ist allerdings auch ein zweites Werkzeug vorgesehen, um das andere Gehäuseteil drehfest zu greifen und ein besonders leichtes Schrauben zu ermöglichen.

Die Innenkontur und die Außenkontur erlauben ein Hineinstecken des Gehäuses in das Werkzeug und ein Drehen des Gehäuseteils gemeinsam mit dem Werkzeug bzw. durch das Werkzeug. Es ist nicht erforderlich, aber möglich, dass die Innenkontur und die Außenkontur ähnlich, gleich oder parallel aufgebaut sind.

Es kann eine Presspassung zwischen der Innenkontur und der Außenkontur vorgesehen sein. Auf diese Weise verbleibt der abgeschraubte Gehäuseteil in der Innenkontur des Werkzeugs gehalten, wenn das Gehäuse geöffnet ist. So kann ein Verlieren des kleinen Gehäuseteils verhindert werden. Nach dem Wechsel der Batterie kann das Zusammenschrauben der Gehäuseteile dann besonders einfach erfolgen, das abgeschraubte Gehäuseteil bereits vom Werkzeug gehalten wird.

Die Außenkontur des Thermometers und/oder die Innenkontur des Werkzeugs kann beispielsweise eine Kreisform mit einer Abflachung aufweisen. Dies ist besonders einfach herzustellen. Zudem kann die Abflachung damit gleichzeitig als Standfläche für das Thermometer oder das Werkzeug bzw. den unten beschriebenen Behälter verwendet werden. Die Größe der Abflachung kann in einem weiten Bereich unter ästhetischen Gesichtspunkten gewählt werden. Die nicht kreisförmige Außenkontur kann entlang einem großen Teil der Länge oder entlang der gesamten Länge des Thermometers vorhanden sein.

In einer Ausgestaltung ist das Werkzeug Teil eines Behälters zur Aufbewahrung des Speisenthermometers. Das System umfasst also den Behälter zur Aufbewahrung des Speisenthermometers, der das Werkzeug umfasst bzw. ausbildet. Insbesondere ist ein Teil einer Wandung des Behälters, insbesondere eine Aussparung in der Wandung wie z. B. ein Sackloch, mit der Innenkontur ausgestattet. Auf diese Weise kann der abzuschraubende Teil, insbesondere die Spitze des Thermometers, zum Abschrauben besonders einfach und komfortabel in die Wandung eingesteckt werden. Der Behälter kann beispielsweise eine Ladeeinrichtung zum Laden der Batterie des Thermometers umfassen, so dass die Batterie des Thermometers, insbesondere wenn das Thermometer im Behälter angeordnet ist, geladen werden kann.

In einer Ausgestaltung sind die Außenkontur des Speisenthermometers und die Innenkontur des Werkzeugs so ausgebildet, dass bei Ausübung eines übermäßigen Drehmoments ein Schlupf zwischen Gehäuse und Werkzeug erfolgt. Auf diese Weise wird eine übermäßige mechanische Belastung des Gehäuses, insbesondere des Gewindes zum Verbinden der Gehäuseteile, verhindert. So kann eine Beschädigung durch eine übermäßige Kraft oder ein übermäßiges Drehmoment verhindert werden. Zudem kann eine feste Verbindung sichergestellt werden, da der Benutzer eine maximale Kraft aufbringen kann. Ein übermäßiges Drehmoment meint ein Drehmoment, welches einen vorgegebenen Drehmoment-Schwellwert übersteigt. Mit anderen Worten ist eine Drehmomentbegrenzung vorgesehen.

In einer Ausgestaltung ist eine Aussparung in einer Wandung des Behälters mit der Innenkontur ausgestattet ist. Insbesondere ist die Aussparung im Inneren einer Vertiefung des Behälters angeordnet. Auf diese Weise wird eine verdeckte Aussparung bereitgestellt ist, so dass eine Fehlbedienung vermieden wird. Zudem wird eine besonders ungestörte, "saubere" Oberfläche des Behälters gewährleistet.

Insbesondere ist die Vertiefung zur Aufnahme einer Halterung für das Speisenthermometer vorgesehen. Auf diese Weise wird eine doppelte Funktion erfüllt, sodass mit geringem technischem Aufwand der Bedienerkomfort gesteigert wird.

Ein weiterer Aspekt der Erfindung ist ein Verfahren zum Einsetzen einer Batterie in ein Speisenthermometer, insbesondere gemäß der Erfindung. Das Speisenthermometer weist eine Temperaturmesseinheit und eine Batterieaufnahme zum Aufnehmen einer Batterie zum Betreiben der Temperaturmesseinheit auf. Die Temperaturmesseinheit und die Batterieaufnahme sind in einem Gehäuse des Thermometers untergebracht. Das Verfahren umfasst Öffnen einer verschließbaren Öffnung des Gehäuses, um die Batterieaufnahme freizugeben, Einsetzen einer Batterie in die Batterieaufnahme, und/oder Verschließen der verschließbaren Öffnung des Gehäuses.

Alle Merkmale, Vorteile und Ausführungsformen des eingangs erwähnten Speisenthermometers sowie des Systems gelten ebenso für das Verfahren und umgekehrt.

Nachfolgend wird die Erfindung anhand von Beispielen näher erläutert. Es zeigen
- Figur 1:: Speisenthermometer während einer Speisenzubereitung;
- Figur 2:: geöffnetes Speisenthermometer;
- Figur 3:: teilgeschnittene Darstellung eines Speisenthermometers;
- Figur 4:: vergrößertes Detail;
- Figur 5:: geschnittene Explosionszeichnung eines Details;
- Figur 6:: schematische Darstellung einer Abdichtung;
- Figur 7:: schematische Darstellung einer weiteren Abdichtung;
- Figur 8:: schematische Darstellung einer weiteren Abdichtung;
- Figur 9:: schematische Darstellung einer weiteren Abdichtung;
- Figur 10:: als Werkzeug ausgeführter Behälter für ein Speisenthermometer;
- Figur 11:: Öffnen des Speisenthermometers mit dem Werkzeug;
- Figur 12:: Detail eines Behälters für ein Speisenthermometer;
- Figur 13:: schematische Darstellung einer Drehmomentbegrenzung; sowie
- Figur 14:: schematische Darstellung einer weiteren Drehmomentbegrenzung.

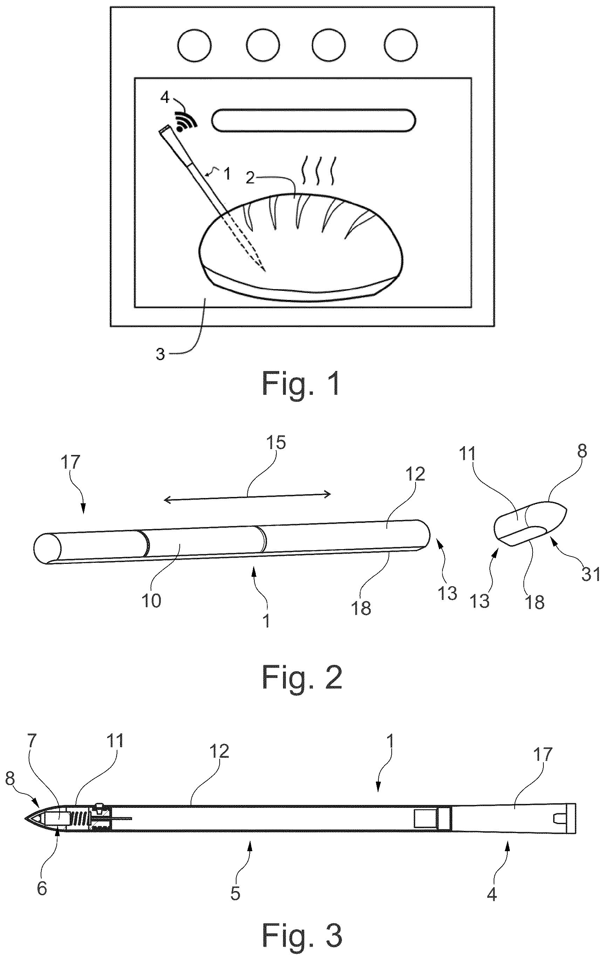

Figur 1 zeigt ein langgestrecktes, stiftförmiges Speisenthermometer 1 (im Folgenden kurz als "Thermometer" bezeichnet), welches mit seiner Spitze in einen Brotteig 2 hineingesteckt ist, um die im Inneren des Brotteiges 2 herrschende Temperatur zu messen bzw. zu überwachen. Der Brotteig 2 befindet sich in einem Backofen 3 und wird erhitzt. Das Speisenthermometer 1 bestimmt Temperaturen, beispielsweise räumlich aufgelöst, und übermittelt diese ermittelten Temperaturen durch eine Funkeinheit 4 drahtlos an ein externes Gerät, z. B. mittels Bluetooth oder Wi-Fi. Durch das externe Gerät wird die Brotzubereitung gesteuert. Dies kann durch eine unmittelbare Steuerung der Temperatur des Backofens geschehen oder aber durch Anweisungen an einen Benutzer, wie die Temperatur des Backofens, die Art der Temperaturzuführung (Auswahlmöglichkeiten wie Oberhitze, Unterhitze oder Umluft) und/oder die Position des Brots innerhalb des Backofens zu verändern ist.

Figur 2 zeigt eine Ausgestaltung eines Thermometers 1 im geöffneten Zustand. Das Gehäuse 10 des Thermometers 1 besteht aus Metall und ist zweigeteilt. Das Gehäuse 10 umfasst ein erstes Gehäuseteil 11 und ein zweites Gehäuseteil 12. Die Gehäuseteile 11, 12 sind mit einer Schraubverbindung direkt miteinander verbunden und können daher durch Schrauben aneinander befestigt und voneinander gelöst werden. Beispielsweise umfasst eines der Gehäuseteile ein Innengewinde und das andere Gehäuseteil ein dazu korrespondierendes Außengewinde, sodass die Gehäuseteile, wenn sie axial zueinander ausgerichtet sind, mittels Rotation um die gemeinsame Mittellängsachse verschraubt bzw. voneinander gelöst werden können.

Die beiden Gehäuseteile 11, 12 befinden sich an unterschiedlichen Positionen in Bezug zur Längsrichtung 15 des Thermometers. Der rechts dargestellte und verdreht gezeichnete erste Gehäuseteil 11 umfasst die Spitze 8 des Thermometers, mit welcher das Thermometer in eine Speise hineingesteckt werden kann. Der links dargestellte zweite Gehäuseteil 12 umfasst ein Griffteil 17 zum Anfassen des Thermometers 1. Dieses kann aus Kunststoff bestehen oder einen Kunststoffüberzug aufweisen, sodass ein Anfassen auch im heißen Zustand des Thermometers 1 möglich ist.

Jedes der Gehäuseteile 11, 12 weist eine Öffnung 13 des Thermometers 1 auf. Das jeweils andere Gehäuseteil dient im verbundenen Zustand als Verschluss der jeweiligen Öffnung 13. Typischerweise befindet sich die Batterieaufnahme in einem der beiden Gehäuseteile 11, 12. Ist die Öffnung 13 dieses Gehäuseteils geöffnet, sind also die Gehäuseteile voneinander getrennt, ist die Batterieaufnahme freigegeben oder kann freigegeben werden und eine Batterie kann aus der Batterieaufnahme entfernt werden und/oder in die Batterieaufnahme eingesetzt werden.

Das Gehäuse 10 hat eine kreiszylinderförmige Grundform. Das Gehäuse 10 weist von dieser Grundform abweichend im Wesentlichen entlang der gesamten Länge des Gehäuses 10 allerdings eine Abflachung 18 auf. Die Außenkontur 31 jedes Gehäuseteils 11, 12 weicht daher nahezu über die gesamte Länge von der Kreisform ab.

Figur 3 zeigt eine teilgeschnittene Darstellung eines Thermometers 1, beispielsweise des Thermometers 1 aus Figur 2, wobei das insbesondere aus Edelstahl hergestellte erste Gehäuseteil 11 mit der Spitze 8, welches auch als Frontkappe bezeichnet wird, auf der linken Seite dargestellt ist. Im Bereich der Spitze 8 befindet sich die Batterieaufnahme 6 mit der darin angeordneten Batterie 7. Auf der rechten Seite des zweiten Gehäuseteils 12 befindet sich der Griffteil 17 mit der Funkeinheit 4. Im mittleren Bereich des Thermometers 1 und/oder im dem ersten Gehäuseteil 11 zugewandten Bereich des zweiten Gehäuseteils 12 befindet sich, im Inneren des Thermometers verborgen, die Temperaturmesseinheit 5.

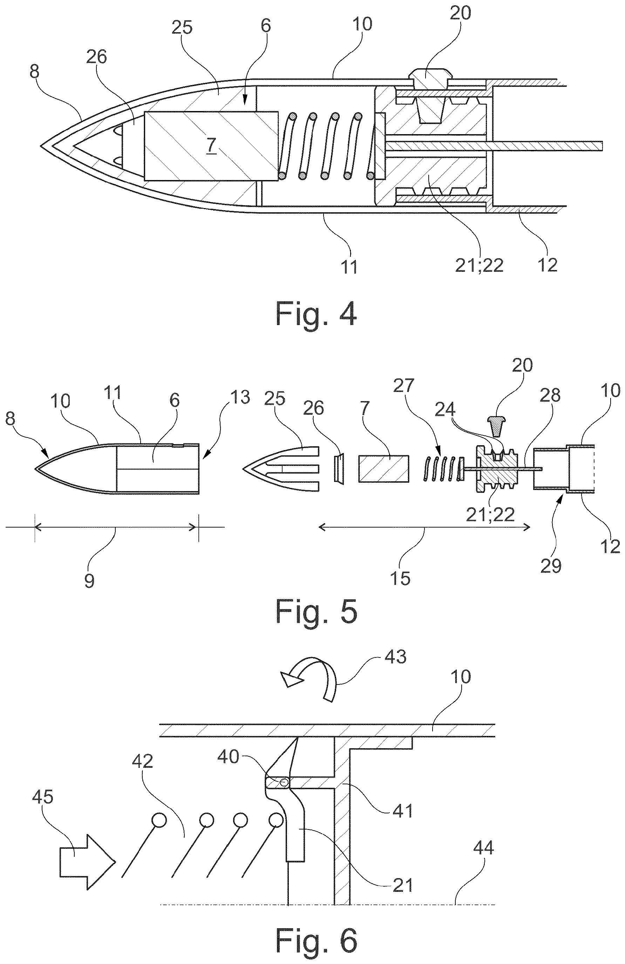

Figur 4 zeigt eine vergrößerte Detaildarstellung insbesondere des Thermometers 1 aus Figur 3. Figur 5 zeigt eine Explosionsdarstellung eines Details, insbesondere des Thermometers 1 aus Figur 4. Im Inneren des ersten Gehäuseteils 11 befindet sich ein insbesondere aus Kunststoff hergestelltes Positionierungselement 25, welches dem Einführen und/oder dem Halten der Batterie 7 in der Batterieaufnahme 6 dient. Das Positionierungselement 25 führt und stabilisiert die Batterie 7 für ein optimiertes Bewegen und Halten der Batterie 7. Aufgrund der in Längsrichtung verlaufenden Stege ("Spinnenform") wird beim Bewegen ein Verklemmen verhindert und/oder ein gewisses Spiel gewährleistet. Außerdem kann das Positionierungselement 25 derart als Einbauhilfe dienen, dass die Batterie 7 zunächst außerhalb des Gehäuses 10 in das Positionierungselement 25 eingeführt werden und anschließend gemeinsam mit dem Positionierungselement 25 in das erste Gehäuseteil 11 eingeführt werden kann. So kann ein komfortables geführtes Bewegen der Batterie im Gehäuse 10 gewährleistet werden. Die Batterieaufnahme 6 grenzt direkt an die Öffnung 13 an, sodass nach dem Trennen der beiden Gehäuseteile 11, 12 ein unmittelbarer Zugriff auf die Batterieaufnahme 6 möglich ist.

Zwischen der Batterie 7 und dem Positionierungselement 25 ist ein Kontaktteil 26 angeordnet, welches einen elektrischen Kontakt herstellt zwischen einem ersten elektrischen Anschluss der Batterie und dem ersten Gehäuseteil 11. Somit dient das Gehäuse 10 als elektrischer Leiter und als Teil des Stromkreises zwischen der Batterie 7 und der Temperaturmesseinheit. Auf der dem Kontaktteil 26 abgewandten Seite der Batterie 7 befindet sich eine Feder 27, mit der der zweite elektrische Anschluss der Batterie 7 elektrisch mit einem elektrischen Leiter 28 verbunden wird. Der elektrische Leiter 28 führt auf der rechten Seite zur (nicht dargestellten) Temperaturmesseinheit. Werden die Gehäuseteile 11, 12 voneinander getrennt, verbleibt die Feder 27 auf der Seite des zweiten Gehäuseteils 12. Wird die Batterie 7 entnommen, löst sich die Feder 27 von der Batterie 7 und diese kann aus der Batterieaufnahme 6 im ersten Gehäuseteil 11 entnommen werden. Insbesondere ist die Feder 27 verliersicher direkt oder indirekt am zweiten Gehäuseteil 12 befestigt, beispielsweise an dem im Folgenden beschriebenen Dichtelement 21, 22.

Der elektrische Leiter 28 verläuft dabei durch ein Dichtelement 21, 22. Dieses hat hier beispielhaft mehrere Funktionen. Zum einen, wie insbesondere in Figur 4 erkennbar ist, dichtet das Dichtelement 21 das Gehäuse 10 nach dem Schließen der Öffnung 13, also nach dem Verbinden der zwei Gehäuseteile 11, 12, ab. Das Dichtelement 21 erstreckt sich zwischen dem ersten Gehäuseteil 11 und dem zweiten Gehäuseteil 12 und kontaktiert die beiden Gehäuseteile 11, 12. So wird ein Eindringen von Fremdstoffen (Feststoffen, Flüssigkeiten, Gasen und Gemischen wie z. B. Dampf) in das Gehäuse 10 wirksam verhindert. Das Dichtelement 21, 22 hat einen Abschnitt mit einer zylinderförmigen Grundform und einen daran anschließenden, im Durchmesser erweiterten Abschnitt an der zum ersten Gehäuseteil 11 weisenden Seite. Das Dichtelement 11, 12 hat an der Mantelfläche des Abschnitts mit der zylinderförmigen Grundform eine Klemmkontur, hier beispielhaft Klemmrippen 24, um im geklemmten Zustand besonders dicht gegenüber dem jeweiligen Gegenstück, hier dem zweiten Gehäuseteil 12, abdichten zu können.

Insbesondere dient das Dichtelement 21, 22 zum anderen dem Abdichten des Gehäuseteils, in dem nicht die Batterieaufnahme untergebracht ist, hier also des zweiten Gehäuseteils 12, im geöffneten Zustand des Gehäuses 10. Auf diese Weise wird ein Eindringen von Fremdstoffen in die Öffnung des jeweiligen Gehäuseteils verhindert. Diese Funktion wird auch dann erfüllt, wenn die Schraube entfernt ist. Das Dichtelement 21, 22 kann zusätzlich zur Schraube am zweiten Gehäuseteil 12 befestigt sein. Zum Abdichten des zweiten Gehäuseteils 12 kann alternativ auch ein separates Dichtelement 22 vorhanden sein.

Eine Schraube dient hier beispielhaft als Verbindungsmittel 20, um das erste Gehäuseteil 11 mit dem zweiten Gehäuseteil 12 formschlüssig zu verbinden. Auf diese Weise ist die Öffnung 13 im ersten Gehäuseteil 11 und in diesem Beispiel zusätzlich die Öffnung 13 im zweiten Gehäuseteil 12 verschlossen. Die Schraube ist senkrecht zur Längsachse des Thermometers 1 ausgerichtet und verläuft durch ein Loch in der Außenwandung des zweiten Gehäuseteils 12 und durch ein Loch in einer Wandung des ersten Gehäuseteils 11, hier beispielhaft in einem zum zweiten Gehäuseteil 12 hin weisenden Verbindungsflansch des ersten Gehäuseteils 11, der zum Verbinden der beiden Gehäuseteile 11, 12 in axialer Richtung in die Außenwandung des ersten Gehäuseteils 21 eingeschoben werden kann. Zudem verläuft die Schraube hier beispielhaft in ein Sackloch in dem Dichtelement 21, 22, welches ein entsprechendes Innengewinde aufweist. So kann die Schraube an dem Dichtelement 21, 22 fixiert werden und dieses halten bzw. zentrieren. Im befestigten Zustand des Verbindungsmittel 20, also im angezogenen Zustand der Schraube, sorgt dieses für ein Andrücken des Dichtelements 21, 22 an die Wandung des zweiten Gehäuseteils 12 und damit für ein besonders effektives Dichten. Das Dichtelement 21, 22 wird also durch das Verbindungsmittel 20 in eine dichtende Position gedrückt.

Die Länge 9 des die Batterieaufnahme 6 aufweisenden ersten Gehäuseteils 11 ist in Längsrichtung 15 des Thermometers gemessen kurz im Vergleich zum zweiten Gehäuseteil 12. Insbesondere beträgt die Länge 9 zwischen 1,5 cm und 4 cm.

In den Figuren 6 bis 9 sind unterschiedliche Ausführungsformen von Dichtelementen 21 dargestellt, um das Gehäuse 10 nach dem Schließen der Öffnung abzudichten. Es sind als Details jeweils Ausschnitte aus einem Längsschnitt durch das Thermometer dargestellt, wobei jeweils nur eine Seite zwischen Außenwandung des Gehäuses 10 und Mittellängsachse 44 dargestellt ist.

Figur 6 zeigt ein Dichtelement 21, welches um eine Drehachse 40 schwenkbar ist. Bei einer durch den Pfeil 45 dargestellten Bewegung und/oder Kraft, die beispielsweise beim Zusammendrücken der beiden Gehäuseteile 21, 22 ausgeführt bzw. ausgeübt wird, drückt eine Feder 42, beispielsweise die Feder 27 aus Figuren 4 und 5, auf einen radial inneren Schenkel des Dichtelements 21. Ein Anlagepunkt an einem Anlageelement 41 dient als Drehachse 40, um die das Dichtelement 21 geschwenkt wird. Diese Rotation ist als Pfeil 43 eingezeichnet. Auf diese Weise klappt eine radial äußere Dichtlippe nach vorne bzw. links an die Außenwandung des Gehäuses 10 an und stellt eine besonders effektive Dichtung bereit. Das Dichtelement 21 wird also auch hier in eine dichtende Position gedrückt. Beispielsweise sind Anlageelement 41 und Dichtelement 21 Teil des zweiten Gehäuseteils 12 und das Dichtelement drückt radial nach außen an das erste Gehäuseteil 11 an.

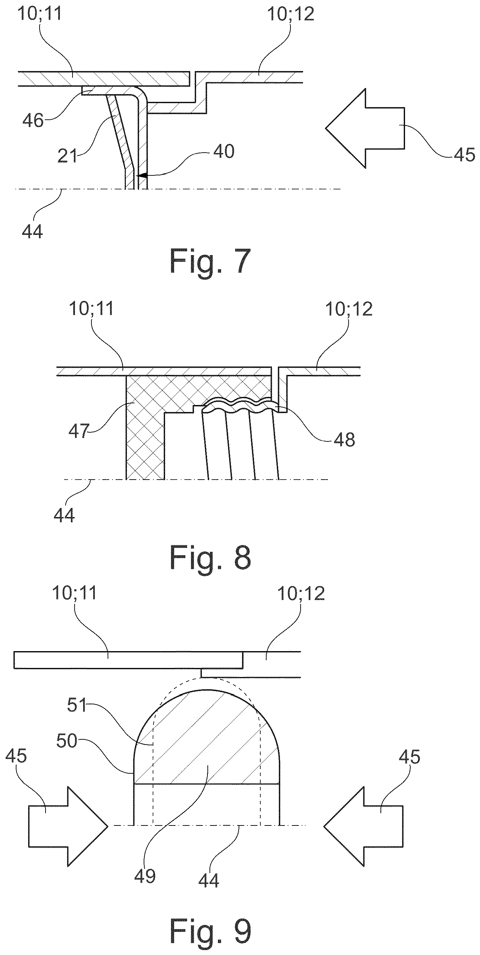

Figur 7 zeigt eine Ausführungsform, bei der das Dichtelement 21 als biegsame und/oder klappbares Dichtelement ausgestaltet ist, welches eine Dichtlippe aufweist oder als solche ausgestaltet ist. Benachbart zum Dichtelement 21 ist ein hier beispielhaft winkelförmiges Anlageelement 46 angeordnet. Im Falle einer mit dem Pfeil 45 dargestellten Bewegung und/oder Kraft klappt ein radial äußerer Teil des Dichtelements 21 nach vorne bzw. links, beispielsweise um die Drehachse 40, um so gegenüber dem ersten Gehäuseteil 11 und/oder einem Teil des Anlageelements 46 abzudichten. Das Dichtelement 21 wird demnach auch hier in eine dichtende Position gedrückt. Beispielsweise kann das Dichtelement 21 mittig befestigt sein, z. B. an dem Anlageelement 46 und/oder im Bereich der Drehachse 40. Beispielsweise können auch hier Anlageelement 41 und Dichtelement 21 Teil des zweiten Gehäuseteils 12 sein. Das Anlageelement 46 kann ebenfalls eine Dichtfunktion erfüllen, beispielsweise gegenüber der Wandung des ersten Gehäuseteils 11.

Eine weitere Ausführungsform ist in Figur 8 dargestellt. Hierbei ist eine beispielsweise aus Kunststoff bestehende Hülse 47 vorhanden, die mit einem Teil des zweiten Gehäuseteils 12 direkt oder indirekt zusammenwirkt. Die Hülse 47 kann z. B. in eines der Gehäuseteile eingepresst sein. Beispielhaft ist in einer einen verringerten Durchmesser aufweisenden axialen Verlängerung des zweiten Gehäuseteils 12 ein Außengewinde 48 vorhanden, welches mit der korrespondierend geformten Hülse 47 des ersten Gehäuseteils 11 dichtend zusammenwirkt. Die Hülse 47 kann alternativ am zweiten Gehäuseteil 12 angeordnet sein und das Gewinde kann am ersten Gehäuseteil 11 angeordnet sein. Die korrespondierenden, axial ausgerichteten Gewinde können als Verbindungsmittel 20 dienen, um die Gehäuseteile 11, 12 in axialer Richtung zusammenzuführen und durch eine Drehbewegung zusammenzuschrauben. So kann eine von außen nicht sichtbare Verschraubung erfolgen. Eine solche Verschraubung kann auch ohne die Dichtfunktion mit zwei beispielsweise aus Metall hergestellten korrespondierenden Gewinden ausgeführt sein. Hierbei kann dann ein zusätzliches Dichtelement vorhanden sein.

In der Ausführungsform aus Figur 9 ist das Dichtelement 21 als Dichtungsbalg 49 ausgeführt, welcher typischerweise an einem der Gehäuseteile befestigt ist. Der Dichtungsbalg 49 wird durch die mit den Pfeilen 45 dargestellte Kraft bzw. Bewegung von einer Ausgangsform 50, die einem ungespannten Zustand entspricht, in eine gewölbte Form 51 bzw. einen gespannten Zustand gedrückt. Dabei wird der Dichtungsbalg 49 in axialer Richtung verkürzt und im Gegenzug in radialer Richtung verlängert. Dadurch wird eine besonders effektive Abdichtung nach außen, beispielsweise gegenüber demjenigen Gehäuseteil erreicht, an dem der Dichtungsbalg nicht befestigt ist. Der Dichtungsbalg 49 wird in die dichtende Position gedrückt.

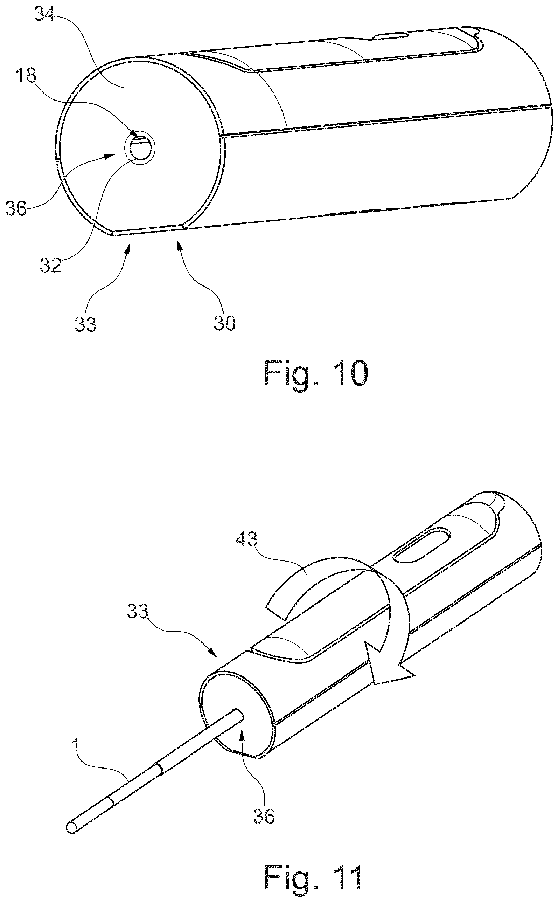

Figur 10 zeigt einen Behälter 33 zum Aufbewahren eines Speisenthermometers. Der Behälter kann zudem zum Laden der Batterie des Thermometers eingerichtet sein. An einer Stirnseite ist in der äußeren Wandung 34 des Behälters 33 eine Aussparung 36 angeordnet, die eine nicht kreisförmige Innenkontur 32 aufweist. Die Aussparung 36 dient als Werkzeug 30, um die Öffnung eines Speisenthermometers zu öffnen. Genau wie die Außenkontur des ersten Gehäuseteils 11 des Thermometers aus Figur 2 hat die Innenkontur 32 eine kreisförmige Grundform mit einer Abflachung 18. Die beiden Konturen können davon abweichend jede beliebige, von der Kreisform abweichende Form aufweisen, die ein Schrauben in zumindest einer Drehrichtung erlaubt.

In Figur 11 ist das Zusammenwirken des Thermometers 1 mit dem Werkzeug 30 dargestellt. Das Thermometer 1 weist hierbei als Verbindungsmittel zwei insbesondere axial mittig angeordnete, miteinander korrespondierende Gewinde auf, um durch Drehung um die Mittellängsachse des Thermometers die beiden Gehäuseteile voneinander zu lösen oder miteinander zu verbinden. Das Thermometer 1 ist derart in die Aussparung 36 eingeführt, dass die Spitze und/oder der erste Gehäuseteil des Thermometers 1 sich teilweise oder vollständig in der Aussparung 36 befindet. Die Abflachung der Aussparung 36 und die Abflachung des Thermometers liegen übereinander, so dass eine drehfeste Verbindung vorliegt. Durch relative Drehung um die Mittellängsachse des Thermometers, beispielsweise durch Drehung des Behälters 33 entlang des Pfeils 43, kann nun ein Gehäuseteil vom anderen Gehäuseteil ohne übermäßige Kraftanstrengung von Hand gelöst werden. In umgekehrter Richtung können die beiden Gehäuseteile miteinander verbunden bzw. verschraubt werden.

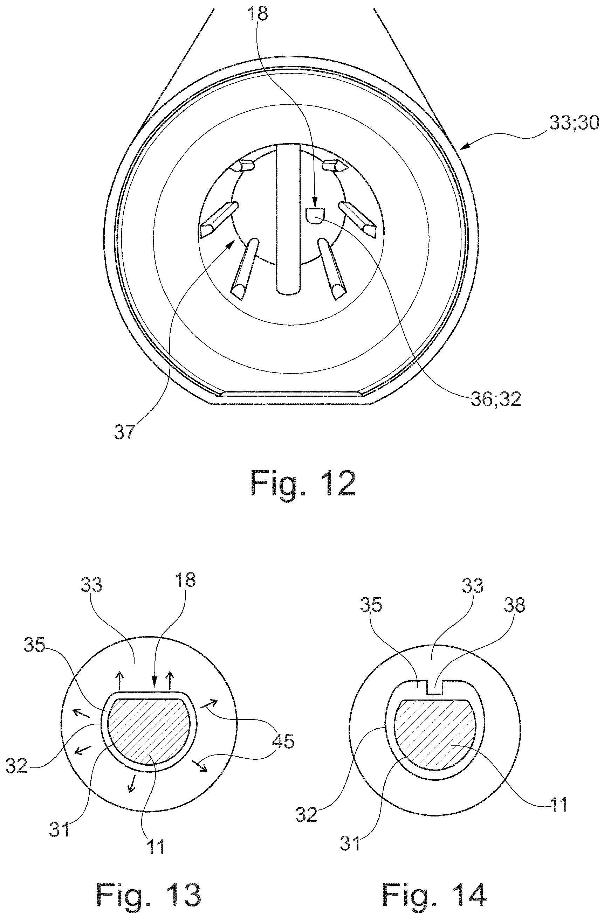

Figur 12 zeigt eine andere Ausführungsform eines Behälters 33 und Werkzeugs 30. Es ist in einer Stirnwand eines Behälters 33 eine Vertiefung 37 vorhanden, die als Aufnahme oder Befestigung für eine Halterung des Thermometers dient. Beispielsweise kann die Halterung in die Vertiefung 37 eingeschoben werden und dort z. B. kraftschlüssig gehalten werden. Im Inneren der Vertiefung 37 ist von außen zugänglich die Aussparung 36 mit der Innenkontur 32 angeordnet. Die Aussparung 36 kann beispielsweise im Grund der Vertiefung 37 angeordnet sein.

Figuren 13 und 14 zeigen schematisch zwei Wege, um bei einem Zusammenwirken von Werkzeug 30 und Thermometer 1 ein übermäßiges Drehmoment zu verhindern. Dargestellt ist jeweils ein Schnitt durch einen im Werkzeug 30 befindlichen ersten Gehäuseteil 11 eines Thermometers, wobei die Schnitt- und Bildebene senkrecht zur Mittellängsachse des Thermometers verläuft. Von innen nach außen sind jeweils der erste Gehäuseteil 11 mit der Außenkontur 31, ein beispielsweise freibleibender Zwischenraum 35 und das Werkzeug 30 mit der Innenkontur 32 dargestellt.

In Figur 13 ist der die Innenkontur bildende Bereich des Werkzeugs 30 flexibel, sodass bei einem übermäßigen Drehmoment eine Verformung des Werkzeugs 30 erfolgt, bei der das Werkzeug zumindest stellenweise entlang der Pfeile 45 radial nach außen bewegt wird. Dadurch kann trotz der vorhandenen Abflachung 18 eine relative Drehung zwischen dem ersten Gehäuseteil 11 und dem Werkzeug 30 erfolgen. Mit anderen Worten kommt es zu einem Schlupf. Das Thermometer wird so insbesondere beim Zusammenschrauben vor einer übermäßigen Kraft geschützt, sodass beispielsweise die Stabilität des Gewindes gewährleistet werden kann. Beispielsweise ist der die Innenkontur bildende Bereich des Werkzeugs aus Kunststoff oder Gummi hergestellt.

In Figur 14 ist zu diesem Zwecke die Innenkontur 32 des Werkzeugs 30 anders geformt als die Außenkontur 31 des ersten Gehäuseteils 11. Anstelle der Abflachung ist an der Innenkontur lediglich ein axial ausgerichtetes Formelement, hier beispielhaft ein Steg 38, vorhanden. Das Formelement ist ebenfalls flexibel, beispielsweise aus Kunststoff oder Gummi hergestellt. Beidseitig des Formelements befindet sich ein vergrößerter Zwischenraum 35. Das Formelement ist so bemessen, dass es sich bei einem übermäßigen Drehmoment seitlich in den Zwischenraum 35 verbiegt und so eine relative Drehung zwischen dem ersten Gehäuseteil 11 und dem Werkzeug 30, also einen Schlupf, zulässt.

### Bezugszeichenliste

| Speisenthermometer | 1 |
|---|---|
| Speise | 2 |
| Backofen | 3 |
| Funkeinheit | 4 |
| Temperaturmesseinheit | 5 |
| Batterieaufnahme | 6 |
| Batterie | 7 |
| Spitze | 8 |
| Länge | 9 |
| Gehäuse | 10 |
| Erstes Gehäuseteil | 11 |
| Zweites Gehäuseteil | 12 |
| Öffnung | 13 |
| Längsrichtung | 15 |
| Griffteil | 17 |
| Abflachung | 18 |
| Verbindungsmittel | 20 |
| Dichtelement | 21 |
| Dichtelement | 22 |
| Klemmrippen | 24 |
| Positionierungselement | 25 |
| Kontaktteil | 26 |
| Feder | 27 |
| Elektrischer Leiter | 28 |
| Absatz | 29 |
| Werkzeug | 30 |
| Außenkontur | 31 |
| Innenkontur | 32 |
| Behälter | 33 |
| Wandung | 34 |
| Zwischenraum | 35 |
| Aussparung | 36 |
| Vertiefung | 37 |
| Rippe | 38 |
| Drehachse | 40 |
| Anlageelement | 41 |
| Feder | 42 |
| Pfeil | 43 |
| Mittellängsachse | 44 |
| Pfeil | 45 |
| Anlageelement | 46 |
| Hülse | 47 |
| Außengewinde | 48 |
| Dichtungsbalg | 49 |
| Ausgangsform | 50 |
| Gewölbte Form | 51 |

## Patentansprüche

1. Speisenthermometer (1), umfassend eine Temperaturmesseinheit (5) und eine Batterieaufnahme (6) zum Aufnehmen einer Batterie (7) zum Betreiben der Temperaturmesseinheit (5), wobei die Temperaturmesseinheit (5) und die Batterieaufnahme (6) in einem Gehäuse (10) untergebracht sind, **dadurch gekennzeichnet, dass** das Gehäuse (10) eine verschließbare Öffnung (13) aufweist, um die Batterieaufnahme (6) für ein Wechseln der Batterie (7) freizugeben.

2. Speisenthermometer (1) nach dem vorhergehenden Anspruch, **dadurch gekennzeichnet, dass** das Gehäuse (10) ein erstes Gehäuseteil (11) und ein zweites Gehäuseteil (12) aufweist, welches vom ersten Gehäuseteil (11) getrennt werden kann.

3. Speisenthermometer (1) nach dem vorhergehenden Anspruch, **dadurch gekennzeichnet, dass** sich das erste Gehäuseteil (11) und das zweite Gehäuseteil (12) an unterschiedlichen Positionen entlang der Längsrichtung (15) des Speisenthermometers (1) befinden.

4. Speisenthermometer (1) nach einem der zwei vorhergehenden Ansprüche, **dadurch gekennzeichnet, dass** das Speisenthermometer (1) eine Spitze (8) zum Einstechen in eine Speise (2) aufweist, wobei das zweite Gehäuseteil (12) die Spitze (8) umfasst und eine Länge (9) von höchstens 6 cm, insbesondere von höchstens 4 cm aufweist.

5. Speisenthermometer (1) nach einem der drei vorhergehenden Ansprüche, **dadurch gekennzeichnet, dass** das Speisenthermometer (1) ein Verbindungsmittel (20) aufweist, um das erste Gehäuseteil (11) und das zweite Gehäuseteil (12) im verbundenen Zustand formschlüssig miteinander zu verbinden.

6. Speisenthermometer (1) nach einem der vorhergehenden Ansprüche, **dadurch gekennzeichnet, dass** das Speisenthermometer (1) so ausgestaltet ist, dass nach einem Öffnen des Gehäuses (10) ein unmittelbarer Zugriff auf die Batterieaufnahme (6) möglich ist.

7. Speisenthermometer (1) nach einem der vorhergehenden Ansprüche, **dadurch gekennzeichnet, dass** das Speisenthermometer (1) ein Dichtelement (21) umfasst, welches das Gehäuse (10) im geschlossenen Zustand der Öffnung (13) abdichtet.

8. Speisenthermometer (1) nach dem vorhergehenden Anspruch und Anspruch 5, **dadurch gekennzeichnet, dass** das Dichtelement (21) so ausgebildet und angeordnet ist, dass im mittels des Verbindungsmittels (20) verbundenen Zustand des ersten Gehäuseteils (11) mit dem zweiten Gehäuseteil (12) zumindest ein Bereich des Dichtelements (21) in eine dichtende Position gedrückt wird.

9. Speisenthermometer (1) nach einem der sieben vorhergehenden Ansprüche, **dadurch gekennzeichnet, dass** das Speisenthermometer (1) ein Dichtelement (22) umfasst, welches das erste Gehäuseteil (11) oder das zweite Gehäuseteil (12) im geöffneten Zustand des Gehäuses (10) abdichtet.

10. Speisenthermometer (1) nach einem der vorhergehenden Ansprüche, **dadurch gekennzeichnet, dass** das Gehäuse (10) langgestreckt ist und/oder zumindest teilweise aus Metall hergestellt ist.

11. System aus einem Speisenthermometer (1) gemäß einem der neun vorhergehenden Ansprüche und einem Werkzeug (30) zum Öffnen der Öffnung (13) des Gehäuses (10), wobei das Speisenthermometer (1) zumindest bereichsweise eine nicht kreisförmige Außenkontur (31) aufweist und das Werkzeug (30) eine nicht kreisförmige Innenkontur (32) aufweist, wobei das Speisenthermometer (1) mit der Außenkontur (31) in das Werkzeug (30) mit der Innenkontur (32) eingeführt und gemeinsam mit diesem gedreht werden kann.

12. System nach dem vorhergehenden Anspruch, **dadurch gekennzeichnet, dass** das Werkzeug (30) Teil eines Behälters (33) zur Aufbewahrung des Speisenthermometers (1) ist,
wobei insbesondere eine Aussparung (36) in einer Wandung (34) des Behälters (33) mit der Innenkontur (32) ausgestattet ist.

13. System nach einem der zwei vorhergehenden Ansprüche, **dadurch gekennzeichnet, dass** die Außenkontur (31) des Speisenthermometers (1) und die Innenkontur (32) des Werkzeugs (30) so ausgebildet sind, dass bei Ausübung eines übermäßigen Drehmoments ein Schlupf zwischen Gehäuse (10) und Werkzeug (30) erfolgt.

14. System nach einem der zwei vorhergehenden Ansprüche, **dadurch gekennzeichnet, dass** eine Aussparung (36) in einer Wandung (34) des Behälters (33) mit der Innenkontur (32) ausgestattet ist, wobei die Aussparung (36) im Inneren einer Vertiefung (37) des Behälters (33) angeordnet ist,
wobei die Vertiefung (37) insbesondere zur Aufnahme einer Halterung für das Speisenthermometer (1) vorgesehen ist.

15. Verfahren zum Einsetzen einer Batterie (7) in ein Speisenthermometer (1), wobei das Speisenthermometer (1) eine Temperaturmesseinheit (5) und eine Batterieaufnahme (6) zum Aufnehmen einer Batterie (7) zum Betreiben der Temperaturmesseinheit (5) aufweist, wobei die Temperaturmesseinheit (5) und die Batterieaufnahme (6) in einem Gehäuse (10) untergebracht sind, das Verfahren umfassend die Schritte:
- Öffnen einer verschließbaren Öffnung (13) des Gehäuses (10), um die Batterieaufnahme (6) freizugeben,
- Einsetzen einer Batterie (7) in die Batterieaufnahme (6),
- Verschließen der verschließbaren Öffnung des Gehäuses (10).
